# EUROPEAN PATENT SPECIFICATION

(11) **EP 2 840 161 B1**
(45) Date of publication and mention of the grant of the patent: **12.09.2018**
(21) Application number: 12874412.5
(22) Date of filing: 17.04.2012
(51) Int. Cl.: C23C 2/02, C21D 9/46, C22C 38/00, C22C 38/06, C23C 2/06, C23C 2/28, B32B 15/01, C21D 1/76, C23C 8/18, C23C 8/80, C22C 38/02, C22C 38/04

(54) **METHOD FOR PRODUCING ALLOYED HOT-DIP GALVANIZED STEEL SHEET HAVING EXCELLENT ADHESION TO PLATING AND EXCELLENT SLIDING PROPERTIES**
VERFAHREN ZUR HERSTELLUNG EINES LEGIERTEN FEUERVERZINKTEN STAHLBLECHES MIT HERVORRAGENDER HAFTUNG AN PLATTIERUNG UND AUSGEZEICHNETEN GLEITEIGENSCHAFTEN
PROCÉDÉ DE PRODUCTION D'UNE TÔLE D'ACIER GALVANISÉE ALLIÉE PAR IMMERSION À CHAUD, PRÉSENTANT UNE EXCELLENTE ADHÉRENCE AU PLACAGE ET D'EXCELLENTES PROPRIÉTÉS DE GLISSEMENT

(43) Date of publication of application: 25.02.2015
(73) Proprietor: JFE Steel Corporation, Tokyo, 100-0011 (JP)
(72) Inventor: MAKIMIZU, Yoichi, Tokyo 100-0011 (JP); SUZUKI, Yoshitsugu, Tokyo 100-0011 (JP); MIYATA, Mai, Tokyo 100-0011 (JP)
(74) Representative: Grünecker Patent- und Rechtsanwälte PartG mbB
(86) International application number: PCT/JP2012/060803
(87) International publication number: WO 2013/157146

(56) References cited:
- EP-A1- 2 009 129
- EP-A1- 2 415 896
- JP-A- H0 625 817
- JP-A- H05 106 001
- JP-A- 2007 291 498
- JP-A- 2007 291 498
- US-A1- 2010 062 163

## Description

### [Technical Field]

The present invention relates to a method for manufacturing a galvannealed steel sheet using a Si-containing high-strength steel sheet as a base material.

### [Background Art]

In recent years, surface treated steel sheet made by imparting rust resistance to base steel sheet, particularly galvanized steel sheets and galvannealed steel sheets having excellent rust resistance are used in the fields of, for example, automobile, home appliance, and building material. In view of the improvement of automotive fuel efficiency and the improvement of the automobile crashworthiness, there are increasing demands for lightweight high-strength automobile bodies using automobile body materials having high strength and a reduced thickness. Therefore, high-strength steel sheets are increasingly used for automobiles.

In general, a galvannealed steel sheet is manufactured such a manner that a thin steel sheet, which is prepared by hot-rolling a slab and cold-rolling and which is used as a base material, are subjected to recrystallization annealing in an annealing furnace of a CGL and galvanizing. The galvannealed steel sheet is manufactured in such a manner that the thin steel sheet is further subjected to an alloying treatment subsequently to galvanizing.

In addition, it is effective to add Si in order to increase the strength of a steel sheet. However, when continuous annealing is performed, Si is oxidized even in a reducing atmosphere of N₂+H₂ gas in which oxidation of Fe does not occur (that is, oxidized Fe is reduced) and a thin film of a Si oxide (SiO₂) is formed on the outermost surface of the steel sheet. Since this thin film decreases wettability between molten zinc and a base steel sheet when a plating treatment is performed, coating defects frequently occur. In addition, even if coating defects do not occur, there is a problem in that coating adhesion is poor.

Patent Literature 1 discloses a method for manufacturing a galvanized steel sheet using a high-strength steel sheet containing a large amount of Si as a base material. In the method, reduction annealing is performed after an oxidized film has been formed on the surface of a steel sheet. However, in the case of Patent Literature 1, the effect of increasing coating adhesion cannot be stably realized.

Patent Literatures 2 through 9 disclose techniques for realizing the stable effect of increasing coating adhesion. In the techniques, for example, the oxidation rate or reduction amount is specified or the oxidation or reduction conditions are controlled on the basis of measurement results of the thickness of an oxidized film in an oxidation zone.

JP 2007 291498 A provides a method of manufacturing a hot-dip-galvanized steel sheet which has no non-deposited area, has a beautiful surface appearance and is excellent in plating adhesion when using a high-Si-content steel sheet as a parent material. The steel sheet is subjected to heating (A-zone heating) at 400-750°C in an atmosphere containing ≥0.1% O₂ and ≥1% H₂O, subsequently heating (B-zone heating) at 600-850°C in an atmosphere containing <0.1% O₂ and ≥1% H₂O, next heating (C-zone heating) in an atmosphere which contains 1-50% H₂ and has a dew point of 0°C and subsequently to a hot-dip galvanizing treatment. Since oxides at the surface, which conventionally react with a roll at C-zone heating and are picked up, are reduced and cut down by B-zone heating, the occurrence of pick-up at C-zone heating can be prevented.

EP 2 415 896 A1 provides a method for manufacturing a high-strength galvanized steel sheet having excellent exfoliation resistance during heavy machining, wherein the steel is annealed and galvanized in a continuous galvanizing line, a temperature region with a furnace temperature of A°C to B°C (600 ≤ A ≤ 780 and 800 ≤ B ≤ 900) is performed at an atmosphere dew-point temperature of -5°C or higher in a heating process.

### [Citation List]

### [Patent Literature]

[PTL 1] Japanese Unexamined Patent Application Publication No. 55-122865
[PTL 2] Japanese Unexamined Patent Application Publication No. 4-202630
[PTL 3] Japanese Unexamined Patent Application Publication No. 4-202631
[PTL 4] Japanese Unexamined Patent Application Publication No. 4-202632
[PTL 5] Japanese Unexamined Patent Application Publication No. 4-202633
[PTL 6] Japanese Unexamined Patent Application Publication No. 4-254531
[PTL 7] Japanese Unexamined Patent Application Publication No. 4-254532
[PTL 8] Japanese Unexamined Patent Application Publication No. 7-34210
[PTL 9] Japanese Unexamined Patent Application Publication No. 2007-291498

### [Summary of Invention]

### [Technical Problem]

However, the present inventors found from the results of the investigations that sufficient coating adhesion still cannot necessarily be achieved in the case where any one of the manufacturing methods according to Patent Literatures 1 through 8 is used. In addition, when the manufacturing method described in Patent Literature 9 is used, although sufficient coating adhesion can be achieved, a variation in alloying degree possibly occurs due to a variation in oxidation amount which occurs in an oxidation treatment. When a variation in alloying degree occurs, since a ζ phase, which is poor in terms of sliding property, is partially formed in a coated layer, it is difficult to achieve a good sliding property. In addition, when the galvannealed steel sheet is manufactured under the condition of a high alloying temperature in order to eliminate a ζ phase, since a thick Γ phase is formed on the interface between the coated layer and the steel sheet, there is a decrease in coating adhesion.

The present invention has been completed in view of the situation described above, and an object of the present invention is to provide a method for manufacturing a galvannealed steel sheet having excellent coating adhesion and sliding property even in the case where Si content is large.

### [Solution to Problem]

The present inventors conducted investigations in order to solve the problems described above, and, as a result, found that a galvannealed steel sheet having excellent coating adhesion and sliding property without coating defects or a variation in alloying degree can be obtained by controlling not only the thickness of an oxide film but also the kind of an oxide film in an oxidation treatment and by controlling the atmosphere for reduction annealing which is performed thereafter in order to increasing the coverage of reduced iron which is formed in a reduction annealing process following the oxidation treatment.

The methods according to the present invention are as follows.
[1] A method for manufacturing a galvannealed steel sheet having excellent coating adhesion and sliding property according to claim 1.
[2] The method for manufacturing a galvannealed steel sheet having excellent coating adhesion and sliding property according to item [1], in which the oxidation treatment is performed using a direct fire type furnace having a direct fire burner.

### [Advantageous Effects of Invention]

According to the present invention, a galvannealed steel sheet having excellent coating adhesion and sliding property can be obtained.

In the present invention, it is important to control the oxidation amount and oxides after an oxidation treatment has been performed and the coverage ratio of reduced iron which is formed on the surface of a steel sheet after reduction annealing has been performed. In order to realize this, in the present invention, by using a manufacturing method in which oxygen concentration in an atmosphere is controlled when a steel sheet is subjected to an oxidation treatment, a galvannealed steel sheet having excellent coating adhesion can be manufactured in the case of a high-strength galvanized steel sheet having a high Si content containing 0.5 mass% or more of Si. Moreover, by controlling the dew point of an atmosphere in a reduction annealing process, since a variation in alloying degree after the alloying treatment is suppressed, a galvannealed steel sheet having excellent sliding property can be manufactured.

### [Brief Description of Drawings]

[Fig. 1] Fig. 1 is a schematic front view illustrating an apparatus for determining a dynamic friction coefficient.
[Fig. 2] Fig. 2 is a schematic perspective view illustrating the shape and size of the bead in Fig. 1.

### [Description of Embodiments]

The oxidation amount and oxides after an oxidation treatment and the coverage ratio of reduced iron formed on the surface of the steel sheet after reduction annealing will be described hereafter.

When reduction annealing is performed after an oxidation treatment has been performed on a steel sheet, iron oxides formed by the oxidation treatment are reduced in a reduction annealing process to form reduced iron, and the reduced iron covers the base steel sheet. Since the reduced iron has small content of chemical elements such as Si which decrease coating adhesion, the reduced iron is very effective for achieving good coating adhesion. In addition, when the coverage ratio of the reduced iron formed after reduction annealing is high, good coating adhesion can be achieved. The reduced iron is preferably present on the surface of the base steel sheet in the coverage ratio of 40% or more.

The coverage ratio of reduced iron can be determined by observing a backscattered electron image of a steel sheet before galvanization is performed using a scanning electron microscope (SEM). Since a backscattered electron image is characterized in that a chemical element having a larger atomic number is observed to be white with higher contrast, a portion covered with the reduced iron is observed to be white. In addition, a portion which is not covered with the reduced iron is observed to be black since oxides of Si and so on are formed on the surface in the case of a high-strength steel sheet containing 0.5 mass% or more of Si. Therefore, the coverage ratio of reduced iron can be obtained by determining the area ratio of a portion looking white using image processing.

In order to increase the coverage ratio of reduced iron, it is important to control the oxidation amount and the kinds of oxides formed on the surface of a base steel sheet after an oxidation treatment has been performed. Preferably, by forming oxides in an amount of 0.1 g/m² or more in terms of oxygen, good coating adhesion can be achieved. Here, although there is no particular limitation on what kind of iron oxide is formed, wustite (FeO) is mainly formed. In addition, although there is no particular limitation on what method is used for determining an oxidation amount, a fluorescent X-ray elemental analysis method using a standard material is effective.

Moreover, in the case of a high-strength galvanized steel sheet containing 0.5 mass% or more of Si, Si-containing oxides are formed at the same time as iron oxides. These Si-containing oxides are mainly SiO₂ and/or (Fe,Mn)₂SiO₄ and are mainly formed on the interface between the iron oxides and the base steel sheet. It was found that, in the case where (Fe,Mn)₂SiO₄ is formed after an oxidation treatment has been performed, there is an increase in the coverage ratio of reduced iron after reduction annealing has been performed. In addition, it was found that, in the case where only SiO₂ is formed, since there is a decrease in the coverage ratio of reduced iron, it is impossible to achieve a coverage ratio for achieving sufficient coating adhesion. Moreover, it was found that, as long as (Fe,Mn)₂SiO₄ is formed, even in the case where SiO₂ is formed at the same time, since there is an increase in the coverage ratio of reduced iron, it is possible to achieve a sufficient coverage ratio. Incidentally, a mechanism with which there is an increase in the coverage ratio of reduced iron in the case where (Fe,Mn)₂SiO₄ is formed has not been clarified.

Although there is no particular limitation on what method is used for judging the existing state of these oxides, infrared spectroscopy (IR) is effective. By confirming the absorption peaks in the vicinity of 1245 cm⁻¹ characterizing SiO₂ and in the vicinity of 980 cm⁻¹ characterizing (Fe,Mn)₂SiO₄, it is possible to judge the existing state of oxides.

As described above, in the present invention, by forming (Fe,Mn)₂SiO₄ after an oxidation treatment has been performed on a steel sheet, since the coverage of reduced iron after reduction annealing has been performed is controlled to be high, good coating adhesion is achieved.

Subsequently, a manufacturing method for controlling an oxidation amount and oxides after an oxidation treatment has been performed and the coverage of reduced iron which is formed on the surface of a steel sheet after reduction annealing has been performed in order to achieve good coating adhesion will be described. In the present invention, a steel sheet is obtained by hot-rolling the slab, subsequently pickling the hot-rolled steel sheet and cold-rolling the pickled steel sheet,. Subsequently, after an oxidation treatment has been performed on the obtained steel sheet, reduction annealing is performed. There is no particular limitation on what method is used for manufacturing a cold-rolled steel sheet before an oxidation treatment is performed, and conventional methods may be used.

In an oxidation treatment, a steel sheet is heated up to a temperature of 600°C or higher in an atmosphere which contains 1000 vol.ppm or more of O₂ and the balance being N₂, CO, CO₂, H₂O and inevitable impurities and then heated up to a temperature of 700°C or higher in an atmosphere which contains less than 1000 vol.ppm of O₂ and the balance being of N₂, CO, CO₂, H₂O and inevitable impurities.

At this time, even in the case where N₂, CO, CO₂, H₂O and inevitable impurities are contained in the atmosphere, as long as O₂ concentration is within the range according to the present invention, a sufficient effect can be realized. With this method, a sufficient amount of iron oxides is formed on the surface of the steel sheet, and, further, (Fe,Mn)₂SiO₄ can be formed together with the iron oxides.

Heating in an atmosphere having an O₂ concentration of 1000 vol.ppm or more in the former part of an oxidation treatment is effective for promoting an oxidation reaction in an atmosphere having a high oxygen concentration, and it is necessary to heat the steel sheet so that the temperature of the steel sheet becomes 600°C or higher. Furthermore, it is preferable to heat the steel sheet so that the temperature of the steel sheet becomes 650°C or higher. In addition, it is necessary to finish heating at a temperature 30°C or more, which is lower than a temperature in the latter part of an oxidation treatment described below in order to perform a heating up process in the latter part. In the case where the O₂ concentration at this stage is less than 1000 vol.ppm, since it is difficult to achieve a sufficient oxidation amount, the O₂ concentration is set to be 1000 vol.ppm or more.

Heating in an atmosphere having an O₂ concentration of less than 1000 vol.ppm in the latter part of an oxidation treatment is effective for promoting formation of (Fe,Mn)₂SiO₄ in an atmosphere having a high temperature and a low oxygen concentration. In the case where an O₂ concentration at this stage is 1000 vol.ppm or more, (Fe,Mn)₂SiO₄ is not formed, which results in a decrease in the coverage of reduced iron. Also, in the case where the temperature is low, (Fe,Mn)₂SiO₄ is not formed. Moreover, from the view point for achieving a sufficient oxidation amount, it is necessary to heat the steel sheet so that the temperature of the steel sheet becomes 700°C or higher.

However, in the case where oxidation excessively occurs, since Fe oxides is exfoliated in a reducing atmosphere furnace in the subsequent reduction annealing process, thus causing pickup defects, the oxidation treatment described above is performed at a temperature of the steel sheet of 850°C or lower.

Incidentally, it is preferable that the oxidation treatment be performed using a direct-fired type heating furnace having a direct-fired burner. A direct-fired burner is a type of burner which heats a steel sheet by applying directly to the surface of the steel sheet a burner flame that is produced by burning a mixture of air and fuel such as a coke oven gas (COG) which is a by-product gas from a steelmaking plant. Because such a direct-fired burner increases the temperature of steel sheet at a higher rate than radiation heating, it provides advantages such as reducing the length of heating furnace and increasing the line speed. Moreover, when the air ratio of a direct fire burner is set at 0.95 or more to increase the proportion of air relative to the fuel, excess oxygen remains in the flames and allows for the acceleration of oxidation of the steel sheet. Therefore, by controlling the air ratio, it is possible to control the oxygen concentration in the atmosphere. In addition, a fuel such as a COG or a liquefied natural gas (LNG) may be used for a direct fire burner.

After the oxidation treatment has been performed on the steel sheet as described above, reduction annealing is performed.

Reduction annealing is performed in an atmosphere whose dew point is 5°C or higher and which contains 1 vol.% or more and 15 vol.% or less of H₂ and the balance being N₂ and inevitable impurities.

The reasons why the H₂ concentration in an atmosphere gas is limited to 1 vol.% or more and 15 vol.% or less are as follows.

If the H₂ concentration is less than 1 vol.%, the amount of H₂ is insufficient to reduce the Fe oxides on the surface of the steel sheet. If the H₂ concentration is more than 15 vol.%, the reduction of Fe oxide is saturated and the excess H₂ is wasted. At this time, part of the oxygen separated from Fe by reduction diffuses into the steel sheet and reacts with Si. In this way, since Si is oxidized inside the steel sheet and the amount of oxides formed on the outermost surface of the steel sheet which is in contact with a coated layer is reduced, good coating adhesion are obtained.

When reduction annealing is performed after an oxidation treatment has been performed, unevenly oxidized portion occurs not a little in the oxidation treatment, causing unevenly alloyed portion in the following alloying treatment. In particular, in the case of steel having high Si content, the unevenly alloyed portion tends to occur. Therefore, in the present invention, the unevenly alloyed portion is reduced by controlling an atmosphere when reduction annealing is performed.

Specifically, it is necessary to control the dew point of an atmosphere for an annealing process to be 5°C or higher. When the dew point of an annealing atmosphere is lower than 5°C, after iron oxides formed by performing an oxidation treatment have been reduced, Si oxides are formed on the surface of the steel sheet. That is, reduction of the iron oxides is completed early in a region where an oxidation amount is comparatively small in the unevenly oxidation portion, Si oxides tend to be formed on the surface of the steel sheet. Therefore, these oxides inhibit an alloying reaction, which results in the occurrence of the unevenly alloyed portion. On the other hand, when the dew point of an annealing atmosphere is 5°C or higher, even after iron oxides have been reduced, Si oxides are not formed on the surface of the steel sheet and formed inside the steel sheet. Therefore, since oxides which inhibit an alloying reaction are not present on the surface of the steel sheet, an unevenly alloyed portion is less likely to occur.

From the view point for controlling the material quality, it is preferable to perform reduction annealing under the conditions such that the temperature of a steel sheet is in a range from 700°C to 900°C and that the soaking time is 10 seconds to 300 seconds.

After reduction annealing has been performed, the annealed steel sheet is cooled down to a temperature of 440°C or higher and 550°C or lower, and then galvanizing is performed. Galvanizing is performed by dipping the steel sheet having a temperature of 440°C or higher and 550°C or lower in a plating bath containing dissolved Al in an amount of 0.08 to 0.18 mass% and by controlling coating weight using, for example, a gas wiping method. The temperature of the plating bath may be in a usual usage range of 440°C or higher and 500°C or lower, and it is preferable that an alloying treatment is performed by heating the steel sheet at a temperature of 460°C or higher and 600°C or lower. If the temperature of the steel sheet is higher than 600°C, there is a decrease in coating adhesion, and, if the temperature of the steel sheet is lower than 460°C, an alloying reaction does not progress.

An alloying treatment is performed so that an alloying degree, that is, Fe content in a coating film in units of mass% is 7 mass% or more and 15 mass% or less. If the Fe content in a coating film is less than 7 mass%, there is deterioration of appearance quality due to the occurrence of a variation in alloying degree, and there is a decrease in sliding property due to formation of a so-called ζ phase. In addition, if the Fe content in a coating film is more than 15 mass%, since a large amount of hard and brittle Γ phase is formed, there is a decrease in coating adhesion.

The steel to which the present invention is applied has a chemical composition containing 0.5 mass% or more and 3.0% or less of Si content. That is because, while Si is a chemical element which is effective for achieving good material properties so as to obtain a strengthened steel, there is no problem in coating adhesion even without applying the present invention when the Si content is less than 0.5 mass%, and it is difficult to increase coating adhesion when the Si content is more than 3.0 mass%. In addition, other chemical elements such as C, Mn, Al, S and P are contained. C content is 0.01 to 0.25 mass%, Mn content is 0.1 to 3.0 mass%, Al content is 0.01 to 1.0 mass%, and both of S and P contents are 0.03 mass% or less. An appropriate amount of, for example, B, Nb, Ti, Mo, Cu, Ni and Cr may be added.

### [EXAMPLE 1]

By performing hot rolling, pickling and cold rolling on steel having a Si content of 1.5 mass% using a conventional method, steel sheets having a thickness of 1.5 mm were manufactured. In addition to Si, the chemical composition of the steel contained C: 0.12 mass%, Mn: 1.9 mass%, Al: 0.04 mass%, S: 0.002 mass% and P: 0.01 mass%. The obtained steel sheets were subjected to an oxidation treatment using a direct-fired type heating furnace under the conditions given in Table 1. Regarding a direct-fired burner, a COG was used as a fuel and O₂ concentration was controlled by changing an air ratio in the atmosphere. The temperatures of the steel sheets at the exit of the furnace were determined using thermocouples which had been fitted onto the samples in advance. In addition, an oxidation amount formed at this time was determined using a standard material and a fluorescent X-ray analysis method. In addition, oxides containing Si which were formed together with iron oxides were analyzed using infrared spectroscopy. It was judged whether or not (Fe,Mn)₂SiO₄ was present according to whether or not a peak in the vicinity of 980 cm⁻¹ characterizing (Fe,Mn)₂SiO₄ was present.

Subsequently, reduction annealing was performed using an infrared heating furnace under the conditions given in Table 1, and then galvanizing was performed in a galvanizing bath containing Al: 0.13 mass% and having a temperature of 460°C. Some of the annealed steel sheets were picked out without being galvanized in order to determine the coverage ratio of reduced iron. The coverage ratio of reduced iron was determined by observing a backscattered electron image using a scanning electron microscope (SEM), in which arbitrary 5 microscopic fields were observed at a magnification of 300 times under the condition that the accelerating voltage was 5 kV. The observed image was binarized by performing image processing, and the area ratio of white portion was defined as the coverage ratio of reduced iron. After galvanizing had been performed, an alloying treatment was further performed at alloying temperatures given in Table 1 for 20 seconds.

The after-plating surface appearance and coating adhesion of the obtained galvannealed steel sheets were evaluated. Regarding after-plating surface appearance, by observing the surface appearance of the steel sheet by performing a visual test after an alloying treatment had been performed, a case where a variation in alloying degree or coating defects did not occur was evaluated as ○, and a case where a variation in alloying degree or coating defects occurred was evaluated as ×. In addition, regarding coating adhesion, by sticking Cellotape (registered trademark) to the coated steel sheet, a peeling amount per unit length was determined from a Zn count number observed using fluorescent X-rays when the tape sticking surface was subjected to a 90 degree bending-unbending test, and, on the basis of the standard below, a case corresponding to rank 1 or 2 was evaluated as good (○), and a case corresponding to rank 3 or more was evaluated as poor (×).
Fluorescent X-rays count number and rank
0 or more and less than 500: 1 (good)
500 or more and less than 1000: 2 (good)
1000 or more and less than 2000: 3 (poor)
2000 or more and less than 3000: 4 (poor)
3000 or more: 5 (poor)

The conditions of an oxidation treatment and reduction annealing and the evaluation results in this EXAMPLE 1 are given in Table 1.

**[Table 1]**

| No. | Oxidation Treatment | | | | | | Soak-annealing in Reducing Atmosphere Furnace | | | | | Alloying Treatment | | After-Plating Surface Appearance | Coating Adhesion | |
|---|---|---|---|---|---|---|---|---|---|---|---|---|---|---|---|---|
| | Former Part | Switching Temperature between Former and Latter Parts (°C) | Latter Part | Temperature at Furnace Exit (°C) | Oxidation Amount (g/m²) | Existence of Peak for (Fe,Mn)₂SiO₄ Yes: ○ No: × | Hydrogen Concentration (vol%) | Dew Point (°C) | Soaking Temperature (°C) | Soaking Time (s) | Reduced Iron Covering Rate (%) | Alloying Temperature (°C) | Fe Content in Coated Layer (%) | | | |
| | O₂ Concentration (ppm) | | O₂ Concentration (ppm) | | | | | | | | | | | | | |
| 1 | 5000 | 710 | 500 | 750 | 0.34 | ○ | 10% | 10 | 830 | 30 | 80 | 500 | 9.8 | ○ | ○ | Example |
| 2 | 1500 | 680 | 500 | 730 | 0.28 | ○ | 10% | 10 | 830 | 30 | 60 | 520 | 10.1 | ○ | ○ | Example |
| 3 | 20000 | 680 | 700 | 720 | 0.43 | ○ | 10% | 10 | 830 | 30 | 90 | 480 | 9.6 | ○ | ○ | Example |
| 4 | 5000 | 590 | 250 | 650 | 0.07 | × | 10% | 10 | 830 | 30 | 30 | 540 | 10.8 | × | × | Comparative Example |
| 5 | 10000 | 670 | 1500 | 700 | 0.25 | × | 10% | 10 | 830 | 30 | 40 | 500 | 9.1 | ○ | × | Comparative Example |
| 6 | 720 | 700 | 250 | 750 | 0.06 | × | 10% | 10 | 830 | 30 | 25 | 540 | 11.5 | × | × | Comparative Example |
| 7 | 5000 | 590 | 500 | 700 | 0.06 | × | 10% | 10 | 830 | 30 | 25 | 540 | 10.9 | × | × | Comparative Example |
| 8 | 5000 | 730 | 500 | 780 | 0.45 | ○ | 13% | 15 | 820 | 30 | 80 | 500 | 8.7 | ○ | ○ | Example |
| 9 | 5000 | 670 | 500 | 700 | 0.31 | ○ | 12% | 20 | 820 | 20 | 65 | 500 | 10.5 | ○ | ○ | Example |
| 10 | 5000 | 660 | 700 | 700 | 0.35 | ○ | 8% | 15 | 800 | 60 | 80 | 560 | 12.0 | ○ | ○ | Example |
| 11 | 10000 | 750 | 700 | 800 | 0.44 | ○ | 3% | 10 | 850 | 130 | 90 | 500 | 10.4 | ○ | ○ | Example |
| 12 | 1500 | 670 | 400 | 700 | 0.15 | ○ | 0% | 5 | 850 | 30 | 10 | 520 | 8.9 | × | × | Comparative Example |
| 13 | 5000 | 750 | 500 | 800 | 0.44 | ○ | 8% | 5 | 840 | 30 | 75 | 520 | 10.5 | ○ | ○ | Example |

In the case of the examples of the present invention, excellent after-plating surface appearance and coating adhesion were obtained. On the other hand, the comparative examples were poor in terms of one or both of after-plating surface appearance and coating adhesion.

### [EXAMPLE 2]

By performing hot rolling, pickling and cold rolling on the similar steel as used in EXAMPLE 1 using a well-known method, steel sheets having a thickness of 1.5 mm were manufactured. Using a continuous galvanizing line consisting of a preheating furnace, a heating furnace having a direct-fired burner, a radiant tube type annealing furnace, a cooling furnace, a galvanizing apparatus and an alloying furnace, an oxidation treatment and reduction annealing were performed on the obtained steel sheet in order to obtain galvanized sheet sheets.

Using a heating furnace having a direct fire burner, an oxidation treatment was performed under the conditions given in Table 2. The heating furnace having a direct fire burner was divided into 4 zones each having the same zone length. A COG was used as a fuel for a direct fire burner, and O₂ concentrations of the atmosphere in the respective zones were controlled by changing the air ratios of the former part (zones 1 through 3) and the latter part (zone 4) of the heating furnace. The temperature of the steel sheet at the exit of the furnace after an oxidation treatment had been performed was determined using a radiation thermometer. Subsequently, after reduction annealing had been performed under the conditions given in Table 2, galvanizing was performed using a galvanizing bath having a temperature of 460°C, and then an alloying treatment was performed. Moreover, the obtained steel sheets were subjected to skin pass rolling under the condition that the rolling reduction was 0.3%.

The after-plating surface appearance and coating adhesion of the obtained galvannealed steel sheets were evaluated. The methods for determination and evaluation were the same as described in EXAMPLE 1.

In addition, in order to investigate not only an apparent uneven alloying but also a substantive variation in uneven alloying, a sliding property was evaluated. A sliding property was evaluated on the basis of a friction coefficient determined under the conditions described below.

Incidentally, coating adhesion and a sliding property were evaluated on the basis of the values determined for the three positions in the width direction of the steel sheet (at a position of 1/4 of the width, the central position in the width direction and at a position of 3/4 of the width).

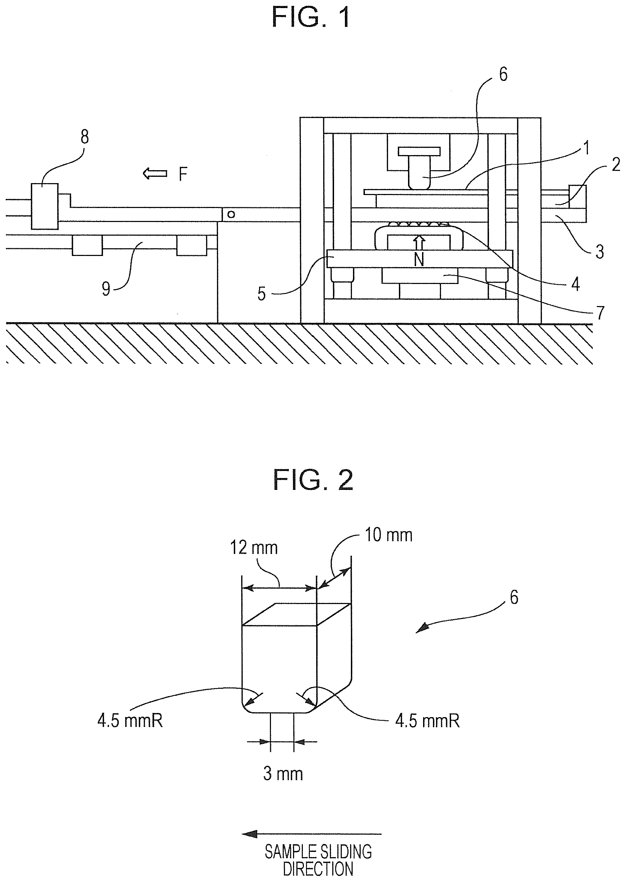

Fig. 1 is a schematic front view illustrating an apparatus for determining a friction coefficient. As illustrated in Fig. 1, a sample 1 for determining friction coefficient, which is cut out of a sample material is fixedly mounted on a sample stage 2, the sample stage 2 is fixedly placed on the upper surface of a slide table 3 that is horizontally movable. On the lower surface of the slide table 3, a slid table supporting stand 5 that is vertically movable having rollers 4 which contact with the lower surface of the slide table 3 is provided. A first load cell 7 is fitted on the slide table supporting stand 5 in order to determine a pressing load N which is applied to the sample 1 prepared for determining a friction coefficient, through a bead 6 by pushing up the side table supporting stand 5. A second load cell 8 is fitted on an edge of the slide table 3 in order to determine friction resistance F which is necessary to move the slide table 3 in the horizontal direction while the pressing load described above is applied. Here, the test was performed with washing oil for press forming PRETON R352L produced by Sugimura Chemical Industrial Co., Ltd. being applied as a lubricating oil to the surface of the sample 1 prepared for determining friction coefficient.

Fig. 2 is a schematic perspective view illustrating the shape and size of the bead used in the test. The bead 6 slides while the lower surface of the bead 6 is pressed onto the surface of the sample 1. The shape of the bead 6 illustrated in Fig. 2 has a width of 10 mm, a length in the sample sliding direction of 12 mm and curved surfaces on both lower sides in the sliding direction having a curvature radius of 4.5 mmR, and the lower surface of the bead which is pressed onto the sample has a plane shape having a width of 10 mm and a length in the sample sliding direction of 3 mm. Using this bead, with a pressing load N of 400 kgf and a sample pulling speed (horizontal moving speed of the slide table 3) of 100 cm/min, a friction coefficient µ was calculated using the equation µ = F/N. On the basis of the friction coefficient determined as described above, a case where the friction coefficient was 0.20 or less was evaluated as good (○), and a case where the friction coefficient was more than 0.20 was evaluated as poor (×).

The conditions of an oxidation treatment and reduction annealing in the continuous galvanizing line and the evaluation results in this EXAMPLE 2 are given in Table 2.

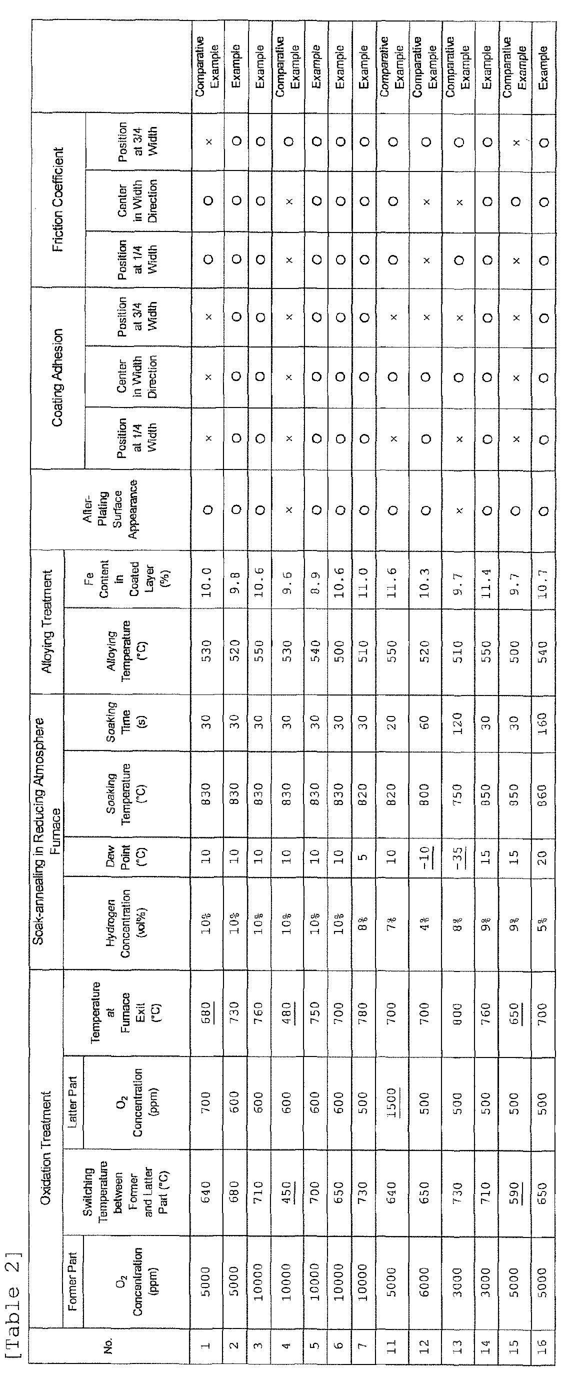

In the case of the examples of the present invention, excellent after-plating surface appearance and coating adhesion were obtained. On the other hand, the comparative examples were poor in terms of one or more of after-plating surface appearance, coating adhesion in the width direction and sliding property.

### [Reference Signs List]

- 1: sample for determining friction coefficient
- 2: sample stage
- 3: slide table
- 4: roller
- 5: slide table supporting stand
- 6: bead
- 7: first load cell
- 8: second load cell
- 9: rail
- N: pressing load
- F: friction resistance

## Claims

1. A method for manufacturing a galvannealed steel sheet having excellent coating adhesion and sliding property in which a steel sheet, having a Si content of 0.5 mass% or more and 3.0 mass% or less, is subjected to an oxidation treatment and reduction annealing, the method comprising:
performing the oxidation treatment under conditions such that the steel sheet is heated up to a temperature of 600°C or higher and 850°C or lower in an atmosphere which contains 1000 vol.ppm or more of O₂ and the balance being N₂, CO, CO₂, H₂O and inevitable impurities and then heated up to a temperature of 700°C or higher in an atmosphere which contains less than 1000 vol.ppm of O₂ and the balance being N₂, CO, CO₂, H₂O and inevitable impurities; and
performing the reduction annealing in an atmosphere whose dewpoint is 5°C or higher and which contains 1 vol.% or more and 15 vol.% or less of H₂ and the balance being N₂ and inevitable impurities, and
subsequently performing galvanizing and alloying.

2. The method for manufacturing a galvannealed steel sheet having excellent coating adhesion and sliding property according to Claim 1, wherein the oxidation treatment is performed using a direct fire type furnace having a direct fire burner.

## Patentansprüche

1. Verfahren zur Herstellung eines Galvannealed Stahlblechs mit ausgezeichneter Beschichtungshaftung und Gleiteigenschaft, wobei ein Stahlblech mit einem Si-Gehalt von 0,5 Masse-% oder mehr und 3,0 Masse-% oder weniger, einer Oxidationsbehandlung und einem Reduktionsglühen unterworfen wird, wobei das Verfahren umfasst:
Durchführung der Oxidationsbehandlung unter solchen Bedingungen, dass das Stahlblech auf eine Temperatur von 600°C oder mehr und 850°C oder weniger in einer Atmosphäre erhitzt wird, die 1000 Vol.-ppm oder mehr O₂ enthält, wobei Rest N₂, CO, CO₂, H₂O und unvermeidliche Verunreinigungen enthält, und dann auf eine Temperatur von 700°C oder mehr in einer Atmosphäre erhitzt wird, die weniger als 1000 Vol.-ppm O₂ enthält und wobei der Rest N₂, CO, CO₂, H₂O und unvermeidliche Verunreinigungen enthält; und
Durchführung des Reduktionsglühens in einer Atmosphäre, deren Taupunkt 5°C oder höher ist und die 1 Vol.-% oder mehr und 15 Vol.-% oder weniger H₂ enthält, wobei der Rest N₂ und unvermeidliche Verunreinigungen enthält, und
anschließendes Galvanisieren und Legieren.

2. Verfahren zur Herstellung eines Galvannealed Stahlblechs mit ausgezeichneter Beschichtungshaftung und Gleiteigenschaft nach Anspruch 1, wobei die Oxidationsbehandlung unter Verwendung eines Direktbrandofens mit einem Direktbrandbrenner durchgeführt wird.

## Revendications

1. Procédé de fabrication d'une tôle d'acier recuite galvanisée ayant une adhérence de revêtement et une propriété de glissement excellentes dans lequel une tôle d'acier, ayant une teneur en Si de 0,5 % en masse ou plus et 3,0 % en masse ou moins, est soumise à un traitement d'oxydation et un recuit de réduction, le procédé comprenant :
la réalisation du traitement d'oxydation dans des conditions telles que la tôle d'acier est chauffée jusqu'à une température de 600 °C ou plus et 850 °C ou moins dans une atmosphère qui contient 1 000 ppm en volume ou plus d'O₂ et le reste étant N₂, CO, CO₂, H₂O et des impuretés inévitables puis chauffée jusqu'à une température de 700 °C ou supérieure dans une atmosphère qui contient moins de 1 000 ppm en volume d'O₂ et le reste étant N₂, CO, CO₂, H₂O et des impuretés inévitables ; et
la réalisation du recuit de réduction dans une atmosphère dont le point de rosée est de 5 °C ou supérieur et qui contient 1 % en volume ou plus et 15 % en volume ou moins de H₂ et le reste étant N₂ et des impuretés inévitables, et
la réalisation ultérieure d'une galvanisation et d'une alliation.

2. Procédé de fabrication d'une tôle d'acier recuite galvanisée ayant une adhérence de revêtement et une propriété de glissement excellentes selon la revendication 1, dans lequel le traitement d'oxydation est réalisé en utilisé un four de type à flamme directe ayant un brûleur à flamme directe.
